# EUROPÄISCHE PATENTSCHRIFT

(11) **EP 0 878 042 B1**
(45) Veröffentlichungstag und Bekanntmachung des Hinweises auf die Patenterteilung: **27.10.1999**
(21) Anmeldenummer: 97914072.0
(22) Anmeldetag: 20.01.1997
(51) Int. Cl.: H02B 13/065

(54) **METALLGEKAPSELTE SCHALTANLAGE MIT TEILENTLADUNGSERFASSUNG**
METAL-ENCASED SWITCHGEAR WITH PARTIAL DISCHARGE DETECTION
DISPOSITIF DE COMMUTATION A BLINDAGE METALLIQUE, A DETECTION DE DECHARGE PARTIELLE

(30) Priorität: 31.01.1996 DE 19603462
(43) Veröffentlichungstag der Anmeldung: 18.11.1998
(73) Patentinhaber: SIEMENS AKTIENGESELLSCHAFT, 80333 München (DE)
(72) Erfinder: BAUERSCHMIDT, Peter, D-91126 Schwabach (DE); BEIERL, Ottmar, D-91086 Aurachtal (DE); BULST, Wolf-Eckhart, D-81739 München (DE); MAGORI, Valentin, D-81539 München (DE); OSTERTAG, Thomas, D-85464 Finsing (DE); REINDL, Leonhard, D-83071 Stephanskirchen (DE); SCHOLL, Gerd, D-80636 München (DE); SCZESNY, Oliver, D-85609 Aschheim (DE); LORENZ, Dieter, D-12207 Berlin (DE)
(86) Internationale Anmeldenummer: DE9700091
(87) Internationale Veröffentlichungsnummer: WO9728588

(56) Entgegenhaltungen:
- EP-A- 0 342 597
- DE-A- 2 427 830
- DE-A- 3 045 205
- DE-U- 9 420 199
- PATENT ABSTRACTS OF JAPAN vol. 15, no. 210 (P-1208), 29.Mai 1991 & JP 03 057977 A (MEIDENSHA CORPORATION), 13.März 1991,

## Beschreibung

Die Erfindung betrifft eine metallgekapselte Schaltanlage mit einer Teilentladungserfassung für den Innenraum der Kapselung.

Für Schaltanlagen in der Hoch- oder Mittelspannung besteht allgemein das Ziel, Störungen möglichst frühzeitig zu erkennen und zu beseitigen. Dies betrifft insbesondere Teilentladungen, die oft Vorzeichen für schwerwiegende Störungen, z.B. Überschläge, sind. In gekapselten Anlagen sind Teilentladungen von außen nur schwer festzustellen.

Ein Meßsystem zur Erkennung derartiger Störungen ist beispielsweise aus dem Aufsatz "Sensorik für GIS -Anlagen", Armin Diessner, veröffentlicht auf der ETG-Sponsortagung vom 3.Mai bis 29.Juni 1994, bekannt. Bei dem dort beschriebenen Meßsystem werden Störsignale mittels Meßsonden ausgekoppelt und analysiert.

Aus dem deutschen Gebrauchsmuster 94 20 199 ist eine metallgekapselte Hochspannungsschaltanlage bekannt, bei der in einem ihrer Gasräume ein Oberflächenwellenelement (OFW) angeordnet ist. Das OFW dient zum Nachweis von Gasanteilen, die durch Lichtbogeneinwirkung auf das in der Kapselung enthaltene Löschgas entstehen oder zur Detektion von Druckwellen. Dabei ist an der Außenseite der Kapselung eine Antenne angeordnet, die zur drahtlosen Informationsübertragung mit einer Auswerteeinrichtung dient.

Der Erfindung liegt die Aufgabe zugrunde, eine einfache Lösung zur Teilentladungsmessung bei einer gekapselten Schaltanlage oder einem Rohrleiter anzugeben, wobei der Aufwand gering gehalten werden soll.

Die Lösung der Aufgabe gelingt erfindungsgemäß mit einer metallgekapselten Schaltanlage für Hoch- oder Mittelspannung, mit zumindest einem im Innenraum der Kapselung angeordneten Sensor, der zum Erfassen einer Zustandsgröße innerhalb der Kapselung dient und eine Antenne hat, wobei eine auf den Innenraum gerichtete Sende- und Empfangsantenne zum drahtlosen Informationsaustausch mit dem Sensor vorgesehen ist, und wobei elektromagnetisch die Sende- und Empfangsantenne gleichzeitig zur elektromagnetischen Erfassung von Teilentladungen (TE) im Innenraum dient.

Es wurde erkannt, daß trotz der völlig unterschiedlichen Aufgabenstellungen hier zwei Funktionen mit einer gemeinsamen Einrichtung realisiert werden können, wobei mehrere Schritte zum Erreichen der Lösung nötig waren. Die neue Schaltanlage weist nur ein Erfassungselement, nämlich nur eine Antenne oder ein Antennenelement im Innenraum der Kapselung für die TE- Messung und für die übrige Überwachung und Erfassung von Meßgrößen auf. Bevorzugt sind die Sensoren als OFWs ausgebildet, welche besonders klein sind und sich problemlos in der Schaltanlage unterbringen lassen. Die Lösung der Aufgabe gelang unter anderem auch erst dadurch, daß der/die Sensor/en mit seiner/ihren Antenne/n im Innenraum angeordnet ist/sind. Somit ist eine gleichzeitige TE-Erfassung und eine Fernabfrage von Anlageninformationen möglich.

Es ist günstig, wenn eine mit der Sende- und Empfangsantenne verbundene Verarbeitungseinrichtung vorgesehen ist, die eine Erkennungseinrichtung zur Unterscheidung zwischen einem Teilentladungssignal und einem Antwortsignal eines OFWs umfaßt, und wobei beim Erkennen einer Teilentladung ein Meldesignal erzeugt wird. Damit ist eine selektive Fehlererkennung gegeben, wobei das Meldesignal gegebenenfalls über eine Steuer- und Überwachungseinrichtung einer weiteren Verarbeitung zugeführt werden kann. Die Steuer- und Überwachungseinrichtung kann zusammen mit der Verarbeitungseinrichtung eine Baueinheit bilden.

Die Erkennungseinrichtung kann mit Vorteil Speichermittel umfassen, in denen zumindest charakteristische Teilmerkmale von Teilentladungssignalen und/oder Antwortsignalen abgelegt sind, mit denen die erfaßten Signale verglichen werden. Auf diese Weise ist eine Positiv- und/oder Negativ-Aussage über das Vorhandensein einer TE oder eines Antwortsignals möglich. Es ist denkbar, daß nach dieser Methode eine Anordnung nach Art eines Expertensystems mit einer Datenbank realisierbar ist.

Zur Erkennung eines Teilentladungssignals kann beispielsweise bevorzugt ein charakteristisches Frequenzspektrum und/oder ein charakteristischer Signalverlauf, z.B. ein maximaler Pegel, herangezogen werden. Prinzipiell können auf Basis der vorliegenden Erfindung auch weitere Erkennungsroutinen verwendet werden, wie sie aus dem Stand der Technik (beispielsweise EP 0 596 879 B1) bekannt sind. Hierzu gehören insbesondere eine Fourieranalyse des Spektrums sowie die Verwendung einer Fuzzy-Logic oder eines neuronalen Netzes für eine gewichtete Bewertung. Gegebenenfalls kann auch eine statistische Auswertung von Teilentladungen erfolgen, so daß ein Lawineneffekt erkannt werden kann.

Vorteilhafterweise kann eine innerhalb einer vorgegebenen Zeitspanne vor oder nach dem Auftreten einer TE erfaßte Information als ungültig verworfen werden. Somit ist immer ein Sicherheitsabstand zwischen Informationspegel und Störpegel gegeben. Veränderte oder gestörte Dateninformationen kommen also nicht zur Auswertung.

Mit Vorteil kann nach einer Verwerfung einer Information die Informationsübertragung wiederholt werden. Damit ist sichergestellt, daß möglichst kein oder nur ein geringer Datenverlust entsteht.

Es ist auch denkbar, daß zur Erkennung einer TE das erfaßte Signal zusätzlich mit einem Meßsignal eines Oberflächenwellensensors verknüpft oder verglichen wird. Durch diese Verknüpfung von Informationen ist eine genauere Aussage über das Vorliegen einer TE möglich. Gegebenenfalls kann auch eine logische Verknüpfung mit Signalen anderer Schutzgeräte der Anlage, z.B. einem Distanzschutz oder einem Sammelschienenschutz , gegebenenfalls unter gewichteten Gesichtspunkten mit einer Fuzzy-Logic, erfolgen, so daß eine genaue, auch in kritischen oder ungünstigen Betriebssituationen sichere Fehlererkennung gegeben ist. Auf diese Weise ist ein zuverlässiger Betrieb der Schaltanlage möglich.

Eine weitere Lösung der Aufgabe gelingt erfindungsgemäß mit einem metallgekapselten Rohrleiter für Hoch- oder Mittelspannung, mit zumindest zwei auf seinen Innenraum gerichteten Sende- und Empfangsantennen, zwischen denen ein Informationsaustausch stattfindet, wobei zumindest eine Sende- und Empfangsantenne gleichzeitig zu Erfassungen von Teilentladungen innerhalb des Innenraums dient. Die nachfolgend beschriebenen Beispiele gelten sinngemäß auch für diese Informationsübertragungsanordnung.

Ein Ausführungsbeispiel, weitere Vorteile und Details der Erfindung werden nachfolgend anhand der Zeichnung näher erläutert.

Zunächst wird allgemein eine Schaltanlage mit einer Überwachungseinrichtung erläutert, wobei eine Informationsübertragung mit Hochfrequenz verwendet wird. Es versteht sich von selbst, daß die beschriebene Überwachungseinrichtung auch für andere Funktionen innerhalb der Schaltanlage, z.B. zur Erfassung einer Schaltstellung ohne Sensoren nach einem Radarprinzip, für zusätzliche Steuerungsaufgaben oder rein zur Informationsübertragung, verwendbar ist.

Die FIG zeigt eine gekapselte, gasisolierte Schaltanlage 1, wie sie beispielsweise aus dem Stand der Technik gemäß dem obengenannten Deutschen Gebrauchsmuster 94 20 199 bekannt ist. Die Schaltanlage 1 ist für Hoch- oder Mittelspannung geeignet. Unter Schaltanlage wird hier auch ein gekapselter Rohrleiter ohne Schaltelement verstanden.

In diesem Längsschnitt durch einen Teil der Schaltanlage 1 ist ein Abzweig mit einem Schaltgerat 3, insbesondere einem Trenner oder einer Unterbrechereinheit, gezeigt. Zentral in der Kapselung 5 verläuft eine Stromschiene 6 als elektrischer Leiter. Zu näheren Details des Schaltgeräts 3 und dessen Funktion wird auf das obengenannte Gebrauchsmuster verwiesen. Im Innenraum 4 der Kapselung 5 der Schaltanlage 1 sind als Sensoren Oberflächenwellensensoren (OFW) für verschiedenste Aufgaben, beispielsweise OFW 7a für eine Temperaturerfassung, OFW 7b für eine Stromerfassung, OFW 7c für eine Gaserkennung und OFW 7d für eine Stellungserkennung, angeordnet. Es sind dabei auch weitere OFWs für weitere Funktionen oder Aufgaben, z.B. Lichterkennung, Druckmessung usw., denkbar.

Jeder OFW weist als Empfangs- und Sendemittel zumindest eine Antenne 9 zur Informationsübertragung, insbesondere zur Abfrage, auf. Die Informationsübertragung erfolgt dabei von den OFWs 7a bis 7d zu einer zentralen, für alle OFWs 7a bis 7d wirksamen Sende- und Empfangsantenne, die nachfolgend als Antennenelement 11 bezeichnet ist .

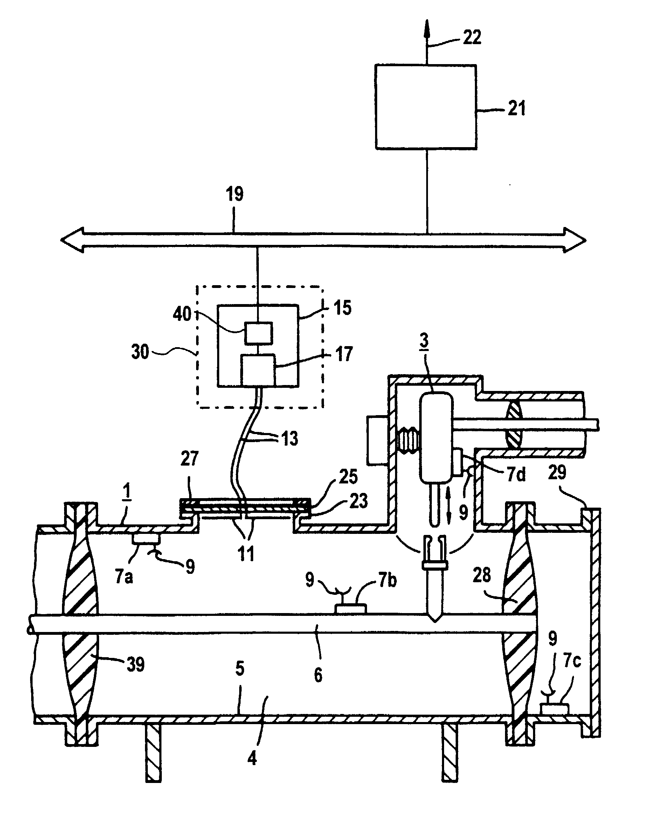

Unter Antenne, Sende- und Empfangsantenne, Antennenelement oder Empfangs- und Sendemittel werden hier jegliche Strahlungs- und Empfangselemente verstanden, die eine Abstrahlung und/oder einen Empfang von elektromagnetischen oder optischen Wellen ermöglichen, beispielsweise Funkantennen, Ultraschall- oder optische Sende- und Empfangselemente (z. B. Infrarotelemente), wobei auch eine Aufteilung in Sende- und Empfangsrichtung umfaßt sein kann. Die Ausführung gemäß FIG 1 bezieht sich beispielhaft auf eine Funk-Informationsübertragung.

Das Antennenelement 11 ist über geeignete Leitungen 13, z.B. einem Koaxialkabel, gegebenenfalls unter Zwischenschaltung eines Anpaßgliedes, mit einer Steuer- und Überwachungseinrichtung (nachfolgend als Überwachungseinrichtung 15 bezeichnet) verbunden. Diese umfaßt ein Sende- und Empfangsteil 17 und eine weitere nicht näher gezeigte Einrichtung zur Signalauswertung, wobei gegebenenfalls ein Prozessor mit Speichereinrichtung umfaßt sein kann.

Das Sende- und Empfangsteil 17 oder zumindest Teile hiervon können prinzipiell auch dezentral bei dem Antennenelement 11 angeordnet sein, so daß zwischen der Überwachungseinrichtung 15 und dem Antennenelement 11 lediglich ein leistungsarmer Datenverkehr stattfindet. Die Sendeleistung wird dann dezentral erzeugt.

Es ist auch denkbar, daß das Antennenelement 11 mit einer dezentralen Einrichtung leitungsgebunden oder drahtlos direkt mit einem Bus 19 verbunden ist. Die Überwachungseinrichtung 15 kann mit dem Sende- und Empfangsteil 17 und dem angeschlossenen Antennenelement 11 im Sinne der vorliegenden Idee auch als Sendeempfangseinrichtung oder Transceiver bezeichnet werden.

Die Überwachungseinrichtung 15 kann beispielsweise eine zentrale Einheit in einer Schaltanlage oder auch eine abzweig- oder gerätebezogene Einrichtung sein, die über eine weitere Datenverbindung, z.B. über den Bus 19 mit einer übergeordneten Zentrale 21 datentechnisch in Verbindung steht. Diese Zentrale 21 kann eine Nahsteuerzentrale sein, welche wiederum über eine geeignete Schnittstelle 22 mit einer übergeordneten Netzleitstelle in Verbindung steht.

Selbstverständlich umfaßt zumindest die Zentrale 21 geeignete Bedien- und Anzeigemittel, z.B. eine Tastatur und einen Bildschirm, für den Betrieb der Schaltanlage 1. Über geeignete nicht näher gezeigte Schnittstellen ist auch ein portables Gerät, z.B. ein tragbarer Computer oder ein Laptop, zur Bedienung oder für sonstige Ein- und Ausgaben an verschiedenste Stellen des in der Figur 1 gezeigten Systems, z.B. am Bus 19 oder an der Überwachungseinrichtung 15, anschließbar.

Die gezeigten Datenverbindungen können beliebig, z. B. als leitungsgebundene Verbindung, insbesondere Drahtleitung oder Lichtleiter, oder drahtlose Verbindung, z.B. Funk-, Schall- oder optische Verbindung, ausgeführt sein.

Im vorliegenden Beispiel ist das Antennenelement 11 innerhalb der Kapselung 5 an einer Öffnung angeordnet. Die Öffnung ist dabei von einem Flansch 23 gebildet, der mit einem Verschluß-element 25, z.B. einem Deckel und einem Druckring 27, verschlossen ist. Selbstverständlich sind hier nicht näher gezeigte Verschraubungen für die Flanschverbindung nach dem Stand der Technik vorzusehen.

Das Antennenelement 11 liegt somit innerhalb der Kapselung 5, so daß beste Bedingungen für eine problemlose Informationsübertragung zu den OFWs 7a bis 7d gegeben ist. Da das Antennenelement 11 quasi innerhalb eines Stutzens liegt und nicht in den Innenraum 4 hineinragt, sind hier elektrische oder feldtechnische Probleme vermieden. Außerdem bildet das Antennenelement 11 mit einem ohnehin von der Kapselung 5 lösbaren Bauteil eine Baueinheit, so daß es einfach zugänglich oder auch nachrüstbar ist.

Die OFWs 7a bis 7d sind dabei zum Teil an der Kapselung 5, zum Teil an der Stromschiene 6, auf einem beweglichen Teil des Schaltgeräts 3 oder auch an oder hinter einem ersten Stützer 28, gegebenenfalls in einem getrennten Gasraum, angeordnet. Gegebenenfalls können mehrere Sensoren für unterschiedliche Funktionen gesammelt an einem Ort angeordnet sein und eine gemeinsame Antenne aufweisen. Es ist auch möglich , daß ein Sensor mehrere Meßfunktionen beinhaltet. Vorteilhafterweise können die Sensoren nach Art und Größe einer Scheckkarte ausgebildet sein, wobei der wesentliche Teil der Karte die Antenne bildet.

Wesentlich für die Funktion der gesamten Überwachung ist, daß eine sichere Funk- oder Datenverbindung innerhalb der Kapselung 5 besteht. Dazu ist der Stützer 28 aus einem dielektrischen Material gefertigt, so daß die Hochfrequenzübertragung auch zwischen dem Antennenelement 11 und dem hinter dem Stützer 28 liegenden OFW 7c nicht beeinträchtigt ist. Bei anderen Übertragungsmethoden ist das Material des Stützers entsprechend vorzusehen (z.B. Glas bei einer optischen Übertragung).

Der Flansch 23 oder die benötigte Öffnung zur Einkopplung kann beispielsweise Teil einer vorhandenen Wartungsöffnung, eines Gasbefüllungsstutzens, einer Gießharzeinfüllöffnung, eines Schaulochs oder auch eines Endflansches sein. Sinngemäß sind daher die hier beispielhaft beschriebenen Ausführungen für jegliche mögliche Öffnungen an Schaltanlagen, beispielsweise auch für den gezeigten Endflansch 29, anwendbar. Es kann auch eine speziell angebrachte Öffnung verwendet werden.

Es ist auch denkbar, daß das Antennenelement 11 außerhalb der Kapselung 5 angeordnet ist und über ein dielektrisches Fenster in den Innenraum 4 strahlt. Hierzu bietet sich beispielsweise als Öffnung ein Einfüllstutzen im Bereich eines Verbindungsflansches zweier Kapselungsabschnitte an, wobei das Antennenelement gegebenenfalls als Stabantenne ausgebildet in die Öffnung eingegossen ist.

Bei Anordnung einer weiteren nicht näher gezeigten Antenne mit einer zugeordneten Steuereinrichtung im Gasraum hinter dem weiteren Stützer 39 ist auch eine Verwendung des Innenraumes 4 der Kapselung 5 als Übertragungsraum möglich, wobei eine geschützte Datenübertragung über lange Strecken möglich ist. Diese Möglichkeit ist bevorzugt bei Rohrleitern einsetzbar. Eine Kombination mit einer gleichzeitigen Sensorabfrage ist denkbar.

Die Überwachungseinrichtung 15 mit dem Sende- und Empfangsteil 17 kann als Verarbeitungseinrichtung 30 mit dem Antennenelement 11 auch eine weitere zusätzliche oder alternative Funktion haben: Die Verarbeitungseinrichtung 30 dient dann gleichzeitig zur Erfassung von TE (Teilentladungen) innerhalb der Kapselung 5.

Dabei wird das als Funkantenne ausgebildete Antennenelement 11 gleichzeitig als Erfassungssensor für eine TE verwendet. Auf diese Weise ist nur eine Antenne oder gegebenenfalls bei einer Anbringung innerhalb der Kapselung 5 nur eine Durchführung für die Leitungen 13 nötig. Unter Umständen kann das Antennenelement 11 für beide Funktionen auch zweiteilig ausgeführt sein.

Gegebenenfalls kann für die Erfassung der TE und für den Informationsaustausch mit den OFWs getrennte Auswerteeinrichtungen verwendet werden. Dabei ist es denkbar, diese über eine entsprechende Antennenweiche gemeinsam an das Antennenelement 11 anzuschließen.

Bevorzugt wird jedoch für beide Funktionen eine gemeinsame Verarbeitungseinrichtung, nämlich vorliegend die Überwachungseinrichtung 15, verwendet. Diese ist bevorzugt als digitale Signalverarbeitungseinrichtung, insbesondere mit einem Rechner und/oder einem digitalen Signalprozessor, ausgebildet. Auf diese Weise sind auch aufwendige Meßwertbearbeitungen, z.B. Fourieranalysen, Fuzzy-Enscheidungen oder neuronale Verfahrensweisen, möglich. Die Überwachungseinrichtung 15 kann gegebenenfalls auch Steuerfunktionen umfassen.

Die Überwachungseinrichtung 15 weist dabei eine Erkennungseinrichtung 40 zur Unterscheidung eines Teilentlandungssignals und eines Antwortsignals eines OFWs auf. Beim Erkennen einer TE wird ein Meldesignal erzeugt, das gegebenenfalls über den Bus 19 und die Zentrale 21 weitergegeben und zur Anzeige gebracht werden kann.

In der Erkennungseinrichtung 40 werden die jeweils empfangenen Signale auf charakteristische Merkmale von TE untersucht. Dazu kann die Erkennungseinrichtung 40 Speichermittel umfassen, in der zumindest charakteristische Teilmerkmale von TE und Antwortsignalen abgelegt sind. Die empfangenen Signale werden dann mit den gespeicherten Teilmerkmalen verglichen, wobei möglichst Übereinstimmungen gesucht werden. Bei einer Übereinstimmung für den jeweiligen Signaltyp wird eine entsprechende Folgereaktion ausgelöst. Im Fall einer TE kann dies beispielsweise eine Meldesignal sein.

Für die Erkennung einer TE wird bevorzugt ein charakteristisches Frequenzspektrum und/oder ein charakteristischer Signalverlauf herangezogen. Im übrigen sind auch weitere aus dem Stand der Technik bekannte Methoden zur genaueren TE-Detektion oder -erkennung möglich, z.B. unter Verwendung von Mittelwert- und Differenzbildungen, Phasenvergleichen, insbesondere mit den Phasengrößen von Strom und Spannung der jeweiligen Schaltanlage, oder speziellen Filtermethoden zur Selektierung der TE. In der Regel erfolgt die Abfrage der OFWs 7a bis 7d in regelmäßigen Abständen oder Zyklen. Eine TE tritt hingegen unregelmäßig auf. Gegebenenfalls kann auch hier unter Verwendung einer Mittelwertbildung eine Signalbearbeitung und Analyse erfolgen.

Wenn im Falle einer TE innerhalb einer vorgegebenen Zeit ein Antwortsignal empfangen wird, so kann davon ausgegangen werden, daß dieses durch die TE verfälscht oder verändert ist. Daher ist es günstig, wenn innerhalb einer vorgegebenen Zeit oder innerhalb eines Zeit fensters vor oder nach des Entstehungszeitpunktes einer TE empfangene Informationen oder Antwortsignale als ungültig verworfen werden. Auf diese Weise kann einer fehlerhaften Datenverarbeitung vorgebeugt werden. Zum Ausgleich kann gegebenenfalls eine Wiederholung der Informationsübertragung angeregt werden, wodurch der Daten- oder Informationsverlust gering gehalten ist.

Um die Aussagegenauigkeit über das Vorhandensein einer TE zu erhöhen kann das Meldesignal zusätzlich auch mit einem weiteren Signal logisch verknüpft werden. Hierzu eignen sich beispielsweise Meßsignale eines OFWs, Signale aus vorhandenen Schutzgeräten, z.B. einem Distanzschutz oder einem Sammelschienenschutz, oder Meßsignale, z.B. ein Strom oder eine Spannung, die innerhalb der Schaltanlage 1 aufgenommen werden. Dabei ist es günstig, wenn die Meßsignale in der Überwachungseinrichtung 15 oder zumindest in der Zentrale 21 in Datenform vorliegen, so daß eine zentrale, bevorzugt digitale Auswertung möglich ist.

Unter Umständen kann auch eine gewichtete Bewertung vorhandener Informationen oder Signalen von Vorteil sein. Unter Verwendung einer Fuzzy-Logic ist es denkbar, daß bei nicht eindeutigen Signalaussagen oder Entscheidungsaussagen unter gewichteten Gesichtspunkten völlig überraschende oder neue Informationen zur Verfügung stehen, die für einen sicheren Betrieb der Schaltanlage 1 von Vorteil sind. Auch kann mit einer "lernenden" Verfahrensweise eines neuronalen Netzes aus früheren Fehlerfällen zukünftige schneller und sicherer erkannt werden.

In der Verarbeitungseinrichtung 30 werden bevorzugt Frequenzen im Bereich von 1 GHZ +/- 500 MHZ näher untersucht, wobei der Informationsaustausch zwischen den OFWs 7a bis 7d in schmalbandigen Bereichen erfolgt, während eine TE ein breitbandiges Signalgemisch erzeugt. Auch hierdurch ist bereits eine Unterscheidung denkbar.

Selbstverständlich sind die obengenannten einzelnen Merkmale und Ausführungen der vorliegenden neuen Idee im Rahmen des fachmännischen Handels miteinander oder mit Merkmalen aus dem Stand der Technik kombinierbar, ohne daß der Grundgedanke der Idee verlassen wird. Wesentlich für die neue Idee ist, daß eine TE-Messung in Kombination mit einer Überwachung der Schaltanlage mittels Sensoren oder mit einer Informationsübertragung innerhalb der Kapselung mittels einer einheitlichen, gemeinsamen Verarbeitungs- und Erfassungseinrichtung möglich ist.

## Patentansprüche

1. Metallgekapselte Schaltanlage (1) für Hoch- oder Mittelspannung, mit zumindest einem im Innenraum (4) der Kapselung (5) angeordneten Sensor (7a bis 7d), der zum Erfassen einer Zustandsgröße innerhalb der Kapselung (5) dient und eine Antenne (9) hat, wobei eine auf den Innenraum (4) gerichtete Sende- und Empfangsantenne (11 bis 11c) zum drahtlosen Informationsaustausch mit dem Sensor (7a bis 7d) vorgesehen ist, und wobei elektromagnetisch die Sende- und Empfangsantenne (11 bis 11c) gleichzeitig zur elektromagnetischen Erfassung von Teilentladungen im Innenraum (4) dient.

2. Metallgekapselte Schaltanlage nach Anspruch 1, wobei eine mit der Sende- und Empfangsantenne (11 bis 11b ) verbundene Verarbeitungseinrichtung (30) vorgesehen ist, die eine Erkennungseinrichtung (40) zur Unterscheidung zwischen einem Teilentladungssignal und einem Antwortsignal eines Sensors (7a bis 7d) umfaßt, und wobei beim Erkennen einer Teilentladung ein Meldesignal erzeugt wird.

3. Metallgekapselte Schaltanlage nach Anspruch 2, wobei die Erkennungseinrichtung (40) Speichermittel umfaßt, in denen zumindest charakteristische Teilmerkmale von Teilentladungssignalen und/oder Antwortsignalen abgelegt sind, mit denen die erfaßten Signale verglichen werden.

4. Metallgekapselte Schaltanlage nach einem der Ansprüche 2 bis 3, wobei die Erkennungseinrichtung (40) zur Erkennung eines Teilentladungssignals ein charakteristisches Frequenzspektrum und/oder einen charakteristischen Signalverlauf, insbesondere eine Pegelüberschreitung, auswertet.

5. Metallgekapselte Schaltanlage nach einem der Ansprüche 1 bis 4, wobei die Erkennungseinrichtung (40) eine innerhalb einer vorgegebenen Zeit von einer Teilentladung erfaßte Information als ungültig verwirft.

6. Metallgekapselte Schaltanlage nach Anspruch 5, wobei die Erkennungseinrichtung (40) nach Verwerfung einer Information die Informationsübertragung wiederholt.

7. Metallgekapselte Schaltanlage nach einem der Ansprüche 2 bis 6, wobei die Erkennungseinrichtung (40) zur Erkennung einer Teilentladung das erfaßte Signal zusätzlich mit einem Meßsignal eines Sensors (7a bis 7d) oder eines Schutzgerätes verknüpft oder vergleicht.

8. Metallgekapselte Schaltanlage nach einem der Ansprüche 1 bis 6, wobei der oder die Sensoren als Oberflächenwellensensoren (7a bis 7d) ausgebildet sind.

9. Metallgekapselter Rohrleiter (1) für Hoch- oder Mittelspannung, mit zumindest zwei auf seinen Innenraum (4) gerichteten Sende- und Empfangsantennen (11 bis 11c), zwischen denen ein Informationsaustausch stattfindet, wobei zumindest eine Sende- und Empfangsantenne (11 bis 11c) gleichzeitig zu Erfassungen von Teilentladungen innerhalb des Innenraums (4) dient.

## Claims

1. Metal-encapsulated switching installation (1) for high or medium voltage, having at least one sensor (7a to 7d) which is arranged in the interior (4) of the encapsulation (5) and is used for detection of a state variable within the encapsulation (5) and has an antenna (9), a transmitting and receiving antenna (11 to 11c), which is directed towards the interior (4), being provided for wire-free information interchange with the sensor (7a to 7d), and the transmitting and receiving antenna (11 to 11c) at the same time being used electromagnetically for electromagnetic detection of partial discharges in the interior (4).

2. Metal-encapsulated switching installation according to Claim 1, a processing device (30) being provided which is connected to the transmitting and receiving antenna (11 to 11b) and comprises an identification device (40) to distinguish between a partial discharge signal and a response signal from a sensor (7a to 7d), and a message signal being produced on identification of a partial discharge.

3. Metal-encapsulated switching installation according to Claim 2, the identification device (40) comprising storage means in which at least characteristic partial features of partial discharge signals and/or response signals are stored, with which the detected signals are compared.

4. Metal-encapsulated switching installation according to one of Claims 2 to 3, the identification device (40), in order to identify a partial discharge signal, evaluating a characteristic frequency spectrum and/or a characteristic signal profile, in particular a level being exceeded.

5. Metal-encapsulated switching installation according to one of Claims 1 to 4, the identification device (40) rejecting as invalid information which is detected within a predetermined time from a partial discharge.

6. Metal-encapsulated switching installation according to Claim 5, the identification device (40) repeating the information transmission after rejection of an information item.

7. Metal-encapsulated switching installation according to one of Claims 2 to 6, the identification device (40), in order to identify a partial discharge, linking or comparing the detected signal in addition to a measurement signal from a sensor (7a to 7d) or from a protective device.

8. Metal-encapsulated switching installation according to one of Claims 1 to 6, the sensor or sensors being designed as surface acoustic wave sensors (7a to 7d).

9. Metal-encapsulated tubular conductor (1) for high or medium voltage, having at least two transmitting and receiving antennas (11 to 11c) which are directed towards its interior (4) and between which an information interchange takes place, at least one transmitting and receiving antenna (11 to 11c) at the same time being used to detect partial discharges inside the interior (4).

## Revendications

1. Installation de distribution (1) à blindage métallique pour haute ou moyenne tension, comportant au moins un capteur (7a à 7d) qui est disposé dans l'espace intérieur (4) du blindage (5), qui sert à la détection d'une grandeur d'état à l'intérieur du blindage (5) et qui a une antenne (9), dans laquelle une antenne d'émission et de réception (11 à 11c) orientée sur l'espace intérieur (4) est prévue pour l'échange d'informations sans fil avec le capteur (7a à 7d), et l'antenne d'émission et de réception (11 à 11c) sert en même temps de façon électromagnétique à la détection électromagnétique de décharges partielles dans l'espace intérieur (4) .

2. Installation de distribution à blindage métallique selon la revendication 1, dans laquelle il est prévu un dispositif de traitement (30) qui est relié à l'antenne d'émission et de réception (11 à 11b) et qui comprend un dispositif de détection (40) pour faire la distinction entre un signal de décharge partielle et un signal de réponse d'un capteur (7a à 7d) et un signal d'avis est produit lors de la détection d'une décharge partielle.

3. Installation de distribution à blindage métallique selon la revendication 2, dans laquelle le dispositif de détection (40) comprend des moyens de mémorisation dans lesquels sont mémorisées au moins des caractéristiques partielles de signaux de décharges partielles et/ou de signaux de réponse avec lesquelles les signaux détectés sont comparés.

4. Installation de distribution à blindage métallique selon l'une des revendications 2 à 3, dans laquelle le dispositif de détection (40) exploite pour la détection d'un signal de décharge partielle un spectre fréquentiel caractéristique et/ou une courbe de signal caractéristique, notamment un dépassement de niveau.

5. Installation de distribution à blindage métallique selon l'une des revendications 1 à 4, dans laquelle le dispositif de détection (40) rejette comme non valable une information détectée à l'intérieur d'un temps prescrit à partir d'une décharge partielle.

6. Installation de distribution à blindage métallique selon la revendication 5, dans laquelle le dispositif de détection (40) répète la transmission d'informations après le rejet d'une information.

7. Installation de distribution à blindage métallique selon l'une des revendications 2 à 6, dans laquelle le dispositif de détection (40), pour la détection d'une décharge partielle, combine ou compare en plus le signal détecté à un signal de mesure d'un capteur (7a à 7d) ou d'un appareil de protection.

8. Installation de distribution à blindage métallique selon l'une des revendications 1 à 6, dans laquelle le ou les capteurs sont conçus comme des capteurs d'ondes de surface (7a à 7d).

9. Canalisation (1) à blindage métallique pour haute ou moyenne tension, comportant au moins deux antennes d'émission et de réception (11 à 11c) qui sont orientées sur son espace intérieur (4) et entre lesquelles un échange d'informations a lieu, dans laquelle au moins une antenne d'émission et de réception (11 à 11c) sert en même temps à détecter des décharges partielles dans l'espace intérieur (4) .
